# EUROPEAN PATENT SPECIFICATION

(11) **EP 3 372 894 B1**
(45) Date of publication and mention of the grant of the patent: **04.09.2019**
(21) Application number: 18159970.5
(22) Date of filing: 05.03.2018
(51) Int. Cl.: F21V 23/04, F21S 9/03, F21V 29/90, H05B 3/40, A01M 29/18, F21V 33/00, A01M 29/10, A01M 29/14

(54) **LIGHTING DEVICE**
BELEUCHTUNGSVORRICHTUNG
DISPOSITIF D'ÉCLAIRAGE

(30) Priority: 08.03.2017 IT 201700025580
(43) Date of publication of application: 12.09.2018
(73) Proprietor: Reale Immobili S.p.A., 10122 Torino (IT)
(72) Inventor: BRUNO, Franco, I-20090 Buccinasco (MI) (IT); POZZI, Roberto, I-20149 Milano (IT); RAMELLA, Alberto, I-10122 Torino (IT)
(74) Representative: Postiglione, Ferruccio

(56) References cited:
- WO-A1-2014/078907
- WO-A1-2017/031586
- JP-A- 2005 011 217
- US-A1- 2006 250 269
- US-A1- 2009 021 943
- US-A1- 2011 101 864
- US-B1- 8 563 898

## Description

### Field of the invention

The present invention refers to lighting devices such as the ones useable, in an exemplifyingly non-limiting way, for lighting outdoor facades or characteristic architectural elements of buildings or monuments.

### Prior art

Lamps supplied by solar power, in other words provided with photovoltaic cells and electric power storage batteries which are portable and therefore do not require a connection to the mains supply, are known.

With reference to the lighting devices to be used outdoor, for lighting facades or specific architectural elements, it is possible to pinpoint several problems associated to the prior art.

Particularly, the Applicant has found that these problems are related to: ice forming on the lamp; the impossibility of lighting some areas of an architectural element of interest as desired; the presence of flying animals; the quality of the emitted light with reference to the different characteristics of the late-afternoon light, or early-evening light; managing the stored electric energy.

Document US 2011/0101864 describes a lamp with a snow removing structure comprising a heating member to melt the snow and a pressure switch that detects the weight of the snow.

Document JP 2005 011217 discloses a signal device provided with ice/snow thawing function.

Document US 200/0021943 describes an outdoor lighting apparatus having a sensor configured for sensing a bird and sending a trigger signal to an expelling signal generating unit.

### Summary of the invention

The object of the present invention consists of providing a lighting device enabling, at least partially, to solve the hereinbefore cited problems.

The above objects are achieved by a lighting device, as defined in claim 1; some embodiments are defined in the dependent claims.

### Brief description of the figures

The present invention will be specifically described in an exemplifying and non-restrictive way, with reference to the attached drawings, wherein:
- Figure 1 schematically shows a lighting device according to an example,
- Figures 2a-2e show different views of a particular embodiment of said lighting device,
- Figure 2f refers to a component of the lighting device,
- Figure 3 shows an example of a response of an accelerometer by a filter,
- Figure 4 shows two diagrams exemplifyingly representing the lighting autonomy of said lighting device during two different days of a year,
- Figure 5 illustrates a simplified model of the spectral composition of the solar light,
- Figure 6 shows an example of a logic circuit managing signals detecting the temperature and the presence/impact of flying animals,
- Figure 7 shows an example of a circuit generating a current for supplying a resistive element,
- Figure 8 shows an example of an implementation of a detecting circuit of a temperature sensor,
- Figure 9 shows an example of an implementation of a circuit generating a varying, pulsed signal to be used for the purpose of preventing ice from forming, or of melting ice and snow.

### DETAILED DESCRIPTION

### Example of the structure of the lighting device

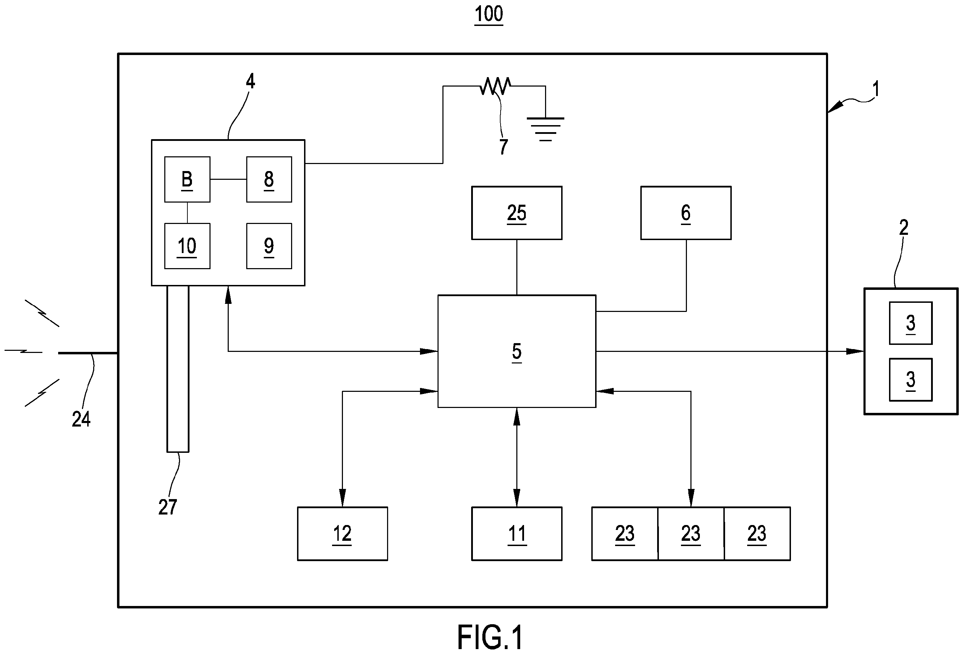

Figure 1 schematically shows a lighting device 100 comprising a case 1 and at least one lighting body 2 provided with one or more light sources 3, such as, preferably, LEDs. The lighting device 100 (in the following will be also called lamp) is also provided with: a power supply module 4 and a control module 5, preferably housed in the case 1.

According to a particular example, the power supply module 4 comprises one or more photovoltaic cells 8, having a suitable surface, for harnessing the solar energy and at least one battery B for storing the electric power produced by the photovoltaic cells 8. Moreover, the power supply module 4 can be provided with a supplying device 9, capable of charging the battery B connected to the photovoltaic cells 8. Advantageously, the power supply module 4 is provided with a charge meter 10 adapted to indicate the total and/or residual charges of the battery B.

Preferably, the control module 5 is a microprocessor, the memory thereof stores control and command algorithms of the lamp 100.

According to the considered example, the lamp 100 is portable and does not require connecting wirings to external apparatuses or to the mains supply. Suitable internal wirings, as are known to a person skilled in the art, are provided.

Specifically, the lamp 100 is adapted to be placed outdoor for lighting facade portions and elements of buildings.

### First embodiment: preventing ice from forming

According to this first embodiment, the lamp 100 is also provided with a temperature sensor 6 connected to the control module 5 and to an electric resistive element 7.

The temperature sensor 6 is configured to detect the temperature of an environment surrounding the lamp 100, and to generate an electric signal representative of the detected temperature. The temperature sensor 6 supplies the detected signals to the control module 5.

The temperature sensor 6 comprises, e.g., a sensitive element and, preferably, a temperature regulator. For example, the sensitive element is a NTC sensor (Negative Temperature Coefficient).

The electric resistive element 7, e.g. a conductive wire or also plural parallel conductive wires, is/are arranged to be supplied by an electric current and to generate, by the Joule effect, heat, adapted to prevent ice from forming (frost and/or snow included), or to rapidly melt them if they are already present on the case 1 of the lamp 100.

Particularly, the control module 5 is configured to identify, from the detection signal supplied by the temperature sensor 6, a possible ice formation on the lamp 100 and therefore to command the power supply module 4 to supply electric current/voltage to the electric resistive element 7. The heat generated by the electric resistive element 7, prevents the ice and/or promotes the melting of the latter formed on the lighting body 2 (and/or on optical elements of the lamp 100), enabling to obtain the desired light.

The electric resistive element 7 can comprise one or more metal wires or, for obtaining a greater efficiency, can comprise one or more carbon-based and/or carbon-containing wires, which show a greater resistivity than the metal conductors. The Applicant has found that employing carbon conductors enables to reduce the length of the used wire, for the same thermal increment, with respect to the metal wires. For example, the generated thermal increment is 5°C.

Preferably, a supporting wall of the cells 8 can be connected, by one or more "flat cool pipes" (flat-type cooling thermal conduits known also as "heat spreaders" 27) to the case 1 of the lamp 100 both for dissipating heat and for aiding, if necessary, to prevent ice and/or frost from forming on the case 1 thereof. When snowing, the cells 8 can be deactivated, however if the sky is clear or turns to clear after snowing, the flat cool pipes have the task of preventing ice from forming. Therefore, this is a passive defrosting action which does not require any command and control circuit because, by the inherent "heat pipe" mechanism, the heat is transferred by conduction from a warm element (photovoltaic cells 8) to a cool element (case 1). Using the flat cool pipes can be preferably an addition to the resistive element 7 or can be an alternative to the resistive element 7.

This first embodiment enables to use the lamp 100 substantially in any latitude, in that is overcomes the problems tied to the ice formation on the case 1 of the lamp 100.

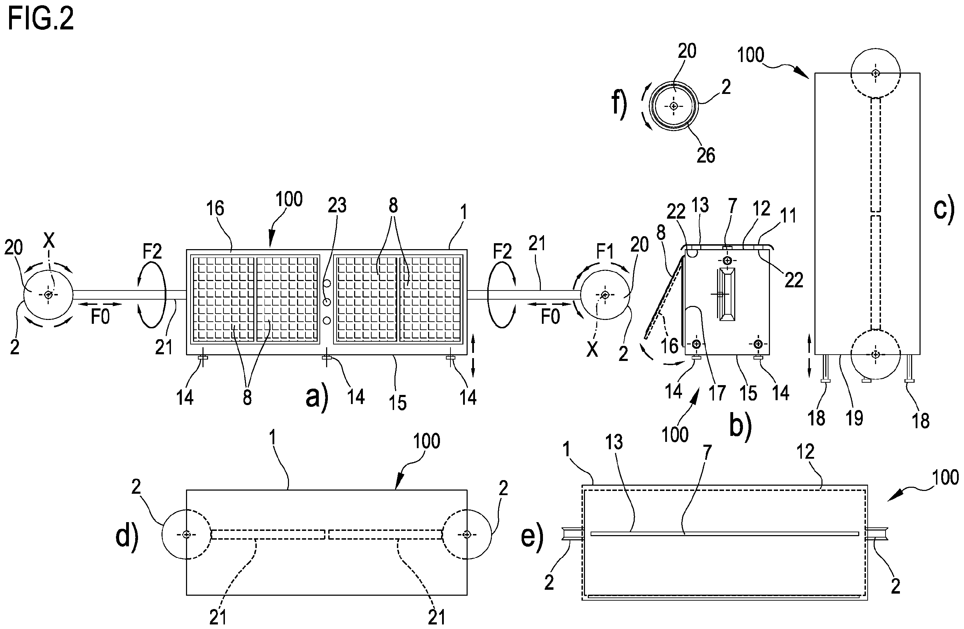

### Example of a practical embodiment: Figure 2

It is made particularly reference to an embodiment example of the lamp 100, shown in Figure 2. The lamp 100 in Figure 2 has the case 1 which can be made of a metal or plastic, opaque or transparent material, for example. Preferably, the shape of the case 1 is indistinct from the architecture to be lighted and has a dimension adapted to the apparatuses contained in it and suitable for placing the lamp 100, for example, on elbow boards and eaves.

With reference to the above described electric resistive element 7, it can be placed between an upper wall 12 of the case 1 and a protective plate 13 (possibly movable) placed on such upper wall 12.

Advantageously, the case 1 of the lamp 100 is provided with first abutment feet 14 associated to a lower wall 15, enabling to place the lamp 100, for example, on elbow boards, eaves, tympanums and other characterizing architectural elements, without requiring masonry structures.

Advantageously, the first abutment feet 14 are of an isostatic type and can be adjusted in order to enable to level off the lamp 100 for compensating possible abnormal differences in level and/or inclinations of the supports (e.g. elbow boards, eaves, etcetera) and also to always enable, because they are isostatic, the lamp itself to completely abut also in case of thermal expansion differentials which could lead to internal tensions between an anchoring product disposed between the feet and the associated support.

Preferably, the case 1 is also provided with second abutment feet 18 (analogous to the first abutment feet 14) fixed to a second lateral part 19 of the case 1 and such to enable to arrange the lamp 100 according to an orientation (see Figure 2c) perpendicular to the one taken when it abuts on the first feet 14 (Figures 2a and 2c).

Moreover, advantageously, the photovoltaic cells 8 are mounted on an oscillating plate 16 hinged to a wall (for example a first lateral wall 17) of the case 1. The oscillating plate 16 will be, for example, a prominent element of the lamp design. The oscillating plate 16 enables to change (optimize) the slope on the horizon of the photovoltaic cells 8. A person skilled in the art can observe that this feature is independent from the defrosting function.

It is observed that, when the lamp 100 is started up, an associated software residing in the control module 5, shows, based on the latitude of the place, the optimal inclination to be provided to the oscillating plate 16 with respect to the horizon. Therefore, the oscillating plate 16 can be manually positioned with an inclination (tilt) correctly indicated by the activation software and which can also change during the seasons. For example, a smaller "tilt" angle can be used in Winter, when the sun is low with respect to the horizon, and a higher "tilt" angle in Summer for the opposite reason.

### Second embodiment: varying the position and/or orientation of the lighting body

According to such embodiment, which is particularly advantageous, the lamp 100 has the possibility of varying the position and/or orientation in the space of the lighting body 2. Preferably, the lamp 100 has at least two lighting bodies 2, each provided with associated light sources 3 (not shown in Figure 2), comprising respective LEDs.

According to the example in Figure 2, the light sources 3 are housed in associated transparent containment bodies 2 suitably shaped for acting as lenses.

Each lighting body 2 is mounted on a supporting structure 21 mechanically coupled to the case 1 for enabling different operative positions associated to different distances between the respective lighting body 2 and case 1. Specifically, each containment body 20 is mounted on a respective supporting structure 21, having the shape of an extendable support (preferably integrated in the lamp 100 design) adapted to position the associated containment body 20 at different distances from the case 1. By making reference only to particular operative aspects, each extendable support 21 can be made by a rod-like or tubular element adapted to slide (in other words translate around the arrow F0), for example inside the case 1, due to, particularly, a respective sliding bushing. According to the example, each lighting body 2 is mounted to an end of the extendable element.

The two rod-like extendable elements 21 enable each containment body 20 to be moved away and towards the case 1, by projecting from an opening present in the first lateral wall 17 and from a further opening present in the opposite lateral wall.

Using the extendable supports 21 enables to adapt the lamp 100 to a width of the required lighting field.

Adjusting the distance between the two lighting bodies 2 enables the light sources 3 to be adapted, for example, to the width of a window (for example of 60-120 cm) of which it is desired to light the jambs and head, or to the width of a pilaster of a facade lighted by a lamp placed in the underlying overhang, etcetera.

The lateral arrangement of the containment bodies offers a further advantage when lighting a window for example by the lamp 100 placed on the elbow board because it prevents to glare a person centrally standing in the window, and in addition stops the upwardly directed light beam of the same. Such condition is imperative since does not prevent to use the window for just looking outside. The lateral expandability of the light sources 3 housed in the containment bodies 20 represents a second degree of freedom.

Advantageously, as shown in Figure 2a, each containment body 20 is mounted on an end of the associated extendable support 21, in order to rotate about a first axis x perpendicular to the plane of Figure 2 (arrow F1).

Moreover, the extendable support 21 can rotate about its longitudinal axis (arrow F2), enabling consequently to rotate the containment body 20.

According to a further example, the containment body 20 has a rotatively sliding opaque shield 26 (Figure 2f) enabling to modify the opening angle of the light beam emitted by the LEDs, which can constitute the light sources 3. The opaque shield 26 slides on the lens of the lighting body 20 and changes the exposed surface thereof, modifying consequently the shape of the light beam exiting the lighting body itself.

Consequently, it is broadened the range of possible orientations of the light source 3 for meeting the requirements of exactly focusing the light where must be maximized its intensity. In addition, it is possible to prevent the undesired consequences of a light pollution of the sky, for example.

Obviously, said degrees of freedom are particularly advantageous conditions for the lamp 100 design.

It is observed that when architectural elements are lighted, the lamp 100 preferably exhibits an indistinct design, devoid of self-referentiality, for minimizing the visual weight with respect to the architecture which is the target of the light.

The requirement of having an indistinct design, as with the minimization of the physical size, are a basic condition for enabling to specifically install the lamp 100 in environments characterized by a substantial historic, monumental and landscaping relevance and therefore in environments subjected to preservation requirements.

A person skilled in the art will observe that what is described with reference to the second embodiment can be independent from what is described in the first embodiment with reference to the melting of ice.

With reference to the electric resistive element 7 (described with reference to the first embodiment), if provided in the structure of Figure 2, it can be placed between the upper wall 12 and protective plate 13.

### Third embodiment: detecting and deterring flying animals

According to a third embodiment, the lamp 100 has the possibility of sensing the presence and/or impact of flying animals landing on the structure thereof, consequently of activating the deterring effects for driving them off.

Particularly, as schematically shown in Figure 1, the lamp 100 is provided with a shock sensor 11 capable of detecting a bird colliding and/or standing and of supplying an associated flying animal presence signal to the control module 5. For example, the shock sensor 11 can be an accelerometer, e. g. a piezo-resistive temperature-compensated type, coupled to the case 1 of the lamp 100.

Moreover, the lamp 100 is provided with a deterrent module 25 configured for driving a flying animal off, for example, an annoying radiofrequency generator at a low variable frequency (from 100 Hz to 1,000 Hz, for example), the said resistive heating element 7 (but supplied by a current of very low strength, equal to, e.g., 5 mA). The current is selected for the purpose of not injuring the flying animal, because of both a low intensity thereof and a final low temperature: for example, it is only generated an annoying tingle to the abutting limbs. Another conductor adapted to heat up, or light sources (in addition or not to the sources 3) adapted to generate an intense annoying light (flashes at a varying frequency, for example), movable elements adapted to annoy the flying animal are also used as deterrent devices 25. These deterrent devices 25 are also not capable of injuring or hurting the flying animals, according to the laws in force.

The control module 5 is configured for receiving the signal generated by the shock sensor 11, determining the presence of the flying animal, and activating the deterrent device 25.

Preferably, the control module 5 processes the signal supplied by the shock sensor 11 for filtering out the background noise (such as vibrations generated by the urban traffic, etcetera), for enabling to distinguish the real signal caused by a shock of the flying animal landing on the lamp 100 case from generic vibrations of another kind.

With reference to the embodiment in Figure 2, a protective plate 13 can be mounted to the upper wall 12 of the case 1 by elastically yieldable supports 22. (e.g. springs). In this case, the piezoelectric sensor 11 can be placed for detecting the vibrations/displacements transmitted from the flying animal to the protective plate 13 and therefore to the elastically yieldable supports 22.

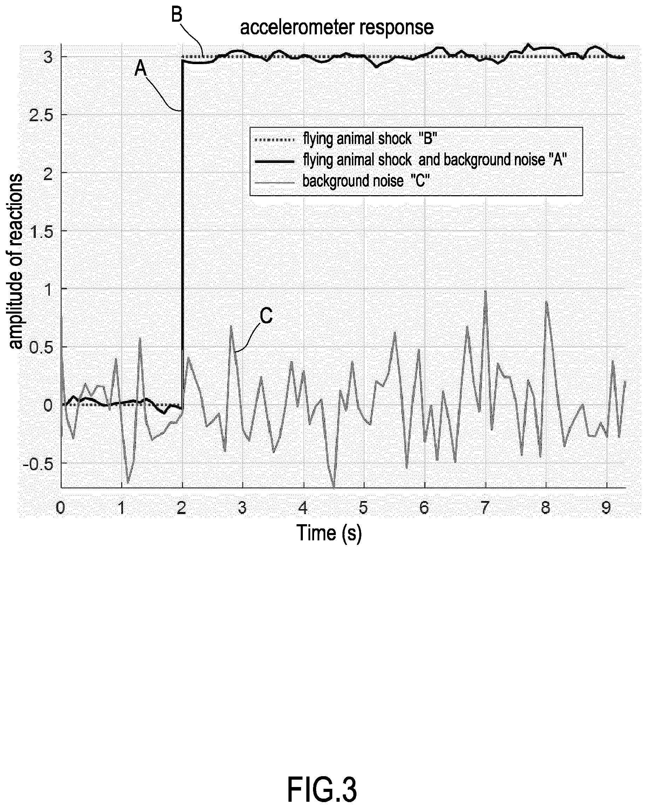

Figure 3 shows an example of a response of a piezo-resistive accelerometer used as shock sensor 11. Specifically, it shows the curve A (continuous line) representing the acceleration due to the impact of the flying animal with the background noise; the curve B (broken line) represents the acceleration due to the impact of a flying animal without the background noise (filtered signal), curve C represents the background noise.

It is observed that the shock sensor 11 (or an additional shock sensor) can be used, according to another example, also for detecting the snow building up on the protective plate 13.

In this case, the snow building up on the protective plate 13 exerts a pressure on the shock sensor 11, which outputs an electric signal (representing the acceleration, for example) having characteristics (the trend over time) enabling it to be distinguished by the control module 5, from a signal representing the impact of the flying animal.

If it is recognized a signal indicative of a snow buildup, the control module 5 can command to activate the electric supply for the electric resistive element 7 which, by producing heat, will melt the forming or formed snow.

As an alternative to the accelerometer, as a shock sensor 11 can be used a sensor coupled to a potentiometer (not shown) capable of sensing a displacement along a vertical stress axis of the protective plate 13, caused by a drop and/or weight of the building-up snow. For example, the potentiometer (supplied by the electric supply module 4) is connectable to an elastically yieldable foot 22. In this way, as a function of how much the plate 13 moves down below the rest position without any stress, there is a displacement of a slide associated to a resistor of the potentiometer, so that a varying electric signal (a voltage for example) representing the snow pile, is supplied.

Particularly, the protective plate 13 is provided with a slit 13a (Figure 2e) from which the underlying resistive element 7 can project, so that when the protective plate 13 moves down due to the snow weight, the resistive element 7 comes in contact with the snow and when heated, efficiently melts it. The presence of the slit 13a is also advantageous if the resistive element is used as flying animal deterrent device 25.

A person skilled in the art observes that what is described with reference to the third embodiment (detecting and deterring flying animals) can be independent from what is described with reference to the first embodiment (preventing ice) and with reference to the second embodiment (changing position and orienting).

### Fourth embodiment: geopositioning function and associated control

According to the fourth embodiment, the lamp 100 is provided with a geopositioning function. Particularly, upon operating for the first time the lamp 100, it can be connected to an external electronic device such as, e.g., a PC, a tablet or a smartphone, by which are downloaded in the memory of the microprocessor 5, the following data:
- values about longitude and latitude of the place where the lighting device 100 is installed;
- orientation of the lamp 100 (azimuth angle with respect to the south);
- installation environment (urban area with different levels of the atmospheric pollution, an extra urban area with a reduced or no atmospheric pollution, for example);
- minimum duration of the night lighting, also settable, for example, as a seasonal varying data or only as a monthly or biweekly data.

The control module 5 could control at least one operative characteristic of the lamp 100, such as, e.g.: the turn-off and turn-on times which vary during the year, the intensity of the light, the color temperature obtained by controlling the supplied power, the quality of the light by sequentially programming and current controlling the (possible) R-G-B-white neutral LEDs by considering the above listed data.

An USB outlet, protected by a weatherproof tab, is provided for connecting the lamp 100 to a PC, tablet, smartphone. Moreover, it is observed that the lamp 100 can be preferably provided with a low power consumption antenna 24 in order to enable a connection to the external electronic device. According to a particular example, the antenna 24 can enable a Wi-Fi connection between a lamp 100, acting as a master lamp, and further lamps 100 acting as slave lamps, if plural lamps are positioned in order to synchronize the operation thereof.

The above described process, regarding the data storage, can be repeated any time the lamp is moved to substantially different places, consequently the lamp can be used in any area of the world. The reproducibility of the geolocalization process makes extremely flexible the lamp 100 even though is temporarily used, for example, for arranging events, and for customized decorative lightings.

Preferably, the internal microprocessor 5 is provided with an algorithm enabling to calculate the theoretical solar irradiation for each day of a year in the installation place, by indicating: the hours at which the sun rises and declines, the height of the same on the horizon during the day, the strength of the harnessed radiation as a function also of the orientation (azimuth and tilt, for example), of the photovoltaic cells 8 by which the lamp 100 is provided, and therefore also the power harnessed under a cloudless condition.

Preferably, it is possible to take into account different irradiation conditions according to the environment pollution degree. The environment pollution data, summarized by the quantity of dusts/cm³, are often found in Internet and therefore can be used for starting up the lamp 100 when is turned on for the first time.

The person skilled in the art can observe that what is described with reference to the fourth embodiment can be independent from what is described with reference to the first embodiment (preventing ice), with reference to the second embodiment (changing position and orienting) and with reference to the third embodiment (detecting and deterring flying animals).

### Fifth embodiment: adjusting the lighting as a function of the hours during which the sunlight is present

Another advantageous aspect is one by which the lamp 100 is capable of knowing, by a solar pattern whose algorithm is stored in the microprocessor 5, both the sun presence hours, and the total sun absence hours and the late-evening post-sunset hours.

According to a particular example, the charge meter 10, associated to the battery B (Figure 1) enables the microprocessor 5 to calculate the battery B run-time and compare it to the programmed minimum lighting duration by also acting, if necessary, on the power of the light sources 3 and therefore on the power consumption.

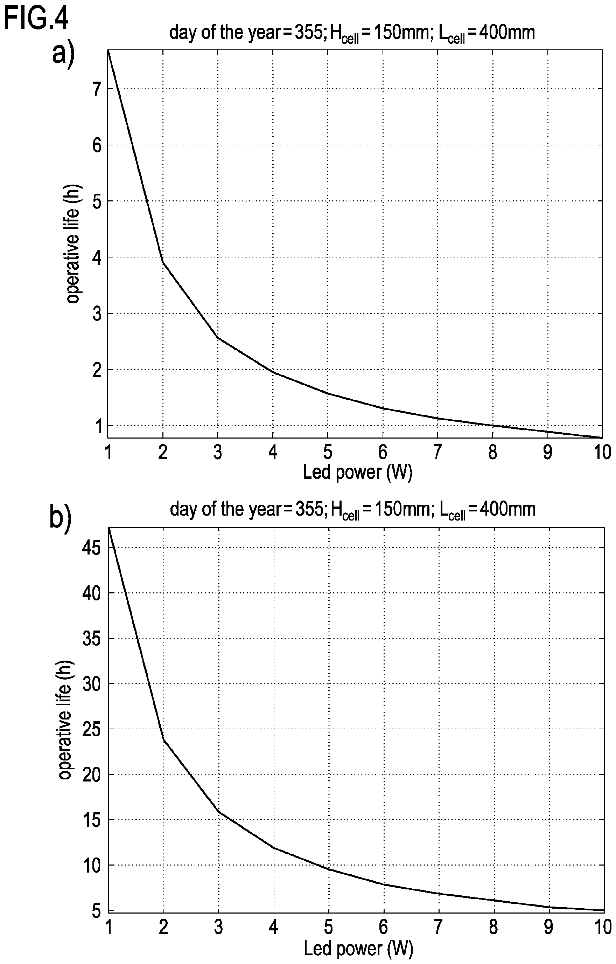

Illustratively, Figures 4a and 4b respectively show two diagrams representing the illumination life of the lamp 100 (exemplifyingly) with reference to two different days of a year (particularly: the Winter solstice and Summer solstice).

By examining and comparing the diagrams in Figure 4, it is understood that the lighting life is a non-banal function of the electric power of the light sources 3 (such as the LEDs). Consequently, the lamp 100 can be automatically programmed so that the turn-on and turn-off times are determined from time to time by taking into consideration at least three parameters correlated to each other:
▪ the activation period corresponding to the dark night period;
▪ the residual charge of the battery B;
▪ the power of the light sources 3.

This enables to modify the light intensity by controlling the supplied power in order to ensure to comply as much as possible with the minimum lighting period possibly required by an user when he/she programs the lamp for the first time.

It is observed that the capability of the lamp to perform an auto-analysis by the algorithms stored in the microprocessor 5, has also the advantage of eliminating the requirement of previously knowing the local atmospheric conditions, both those of the present weather and also the ones foreseeable in the following days, for programming the lighting thereof. Indeed, managing, according to the above described modes - by taking into consideration the capacity of the batteries B - can compensate the uncertainty about the operative duration, caused by the variations of the weather conditions, at least in the near term.

The person skilled in the art will observe that what is described with reference to the fifth embodiment can be independent from what is described with reference to the first embodiment (preventing ice), with reference to the second embodiment (changing position and orienting), with reference to the third embodiment (detecting and deterring flying animals), and with reference to the fourth embodiment (adjusting as a function of the hours in which the sunlight is present).

### Sixth embodiment: adjusting the light as a function of the spectral content of the late-afternoon and early-evening sunlight

According to another advantageous aspect, the lamp 100 exhibits the capability of identifying, with a sufficient accuracy, the power content of the day light in the visible field. According to such example, the lamp 100 comprises three photovoltaic sensors 23, placed on the case 1 and provided respectively with red (R), green (G), and blue (B) filters having a more or less wide spectrum, or if necessary of a "notch" type.

The control module 5 can read the power of the day light in the R-G-B fields, by analyzing the data from the three photovoltaic sensors 23.

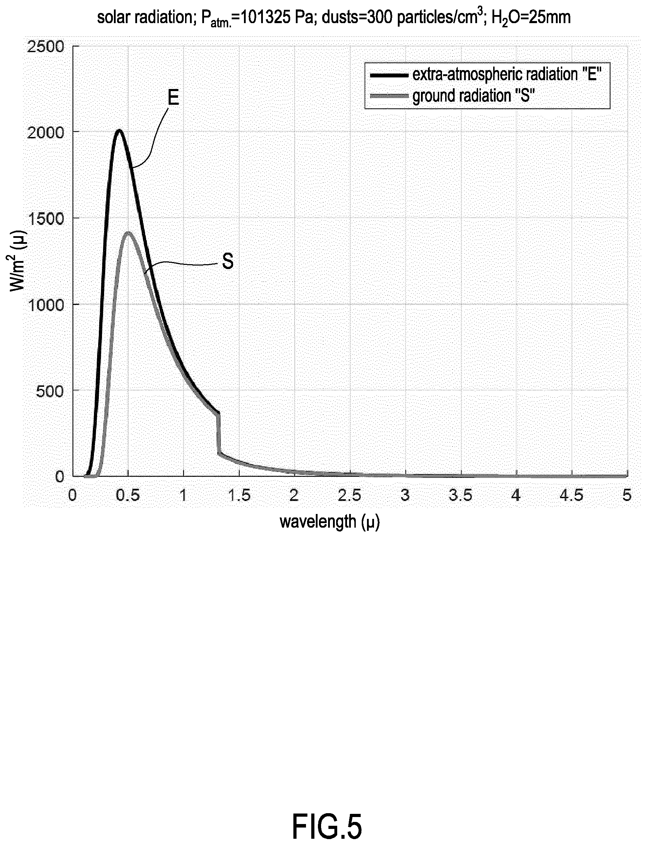

Exemplifyingly, the diagram in Figure 5 shows a simplified model of the spectral composition of the solar light, both in the extra-atmospheric field (curve E) and at the ground in an intermediately polluted urban atmosphere (curve S), measured on a surface perpendicular to the solar radiation.

The simplified model of Figure 5 takes into account a standard content of water in the atmosphere and of an unit content of dusts expressed by particles/cm³ to which approximately correspond the following powers calculated in three spectral fields comprising different wave lengths, and more particularly:
- the solar power in the range from 0.62 to 0.78 micron at the ground = 181.75 W/m²;
- the solar power in the range from 0.50 to 0.61 micron at the ground = 136.86 W/m²;
- the solar power in the range from 0.38 to 0.49 micron at the ground = 124.5 W/m².

Said powers are effectively read with a sufficient accuracy by the three sensors 23 of the lamp 100, enabling the microprocessor 5 to evaluate the "quality" of the incident light. This enables, for example, if the lamp 100 is already turned on in the late-evening period, to change the composition of the light emitted from the same, by the light sources 3 (R-G-B LEDs), with reference to the composition of the incident external natural light, so that the aesthetic result of the artificial light is enhanced.

For example, the lamp 100 could saturate more its light in the spectral range wherein lacks the respective saturation of the external natural life incident on the facade to be lighted.

After all, the algorithm stored in the microprocessor 5 of the lamp 100, by taking into account the orientation of the sensors 23 (by the R-G-B filters) hit by the incident light, enables to correlate the spectral composition read by said sensors 23 to the one incident, for example, on the element to be lighted (a vertical facade, for example) having a slope with respect to the horizontal plane obviously different from the one of said sensors.

Alternatively, the sensors 23 could be sloped with the same angle of the facade walls or of the decorative elements thereof which the lamp should light. It is observed that the sensors 23 can be advantageously mounted on the oscillating plate 16 for varying the inclination thereof.

The algorithm stored in the control module 5 can be such to change the spectral composition of the light emitted from the lamp 100, as a function of the spectral contents of the incident light and taking into account the inclination of the R-G-B sensors 23 from the horizon, and the inclination of an element of interest from the horizon. This enables to more highlight the illuminated element and is particularly useful during the late-evening hours.

Another particularly advantageous aspect consists in the fact that, if a white light is supplied, the color temperature thereof will be not greater than 3.00 - 3,500 K for avoiding to disturb people due to an interference with the natural biorhythms of the human beings.

Controlling the light quality enables, in addition, to modulate the effect of the light as a function of the architectural features of the facade on which is applied, because it promotes an accurate chromatic adjustment as demanded by the agencies responsible for preserving monuments (Superintendence for Architectural Treasures and Cultural Landscape).

The person skilled in the art will observe that what is described with reference to the sixth embodiment can be independent from what is described with reference to the first embodiment (preventing ice), with reference to the second embodiment (changing position and orienting), with reference to the third embodiment (detecting and deterring flying animals), with reference to the fourth embodiment (adjustment based on the hours during which the sunlight is present), and with reference to the fifth embodiment (adjusting the light as a function of the hours during which the solar light is present).

### First circuital example: logic circuit for managing the temperature detection signal and flying animals shock detection signal

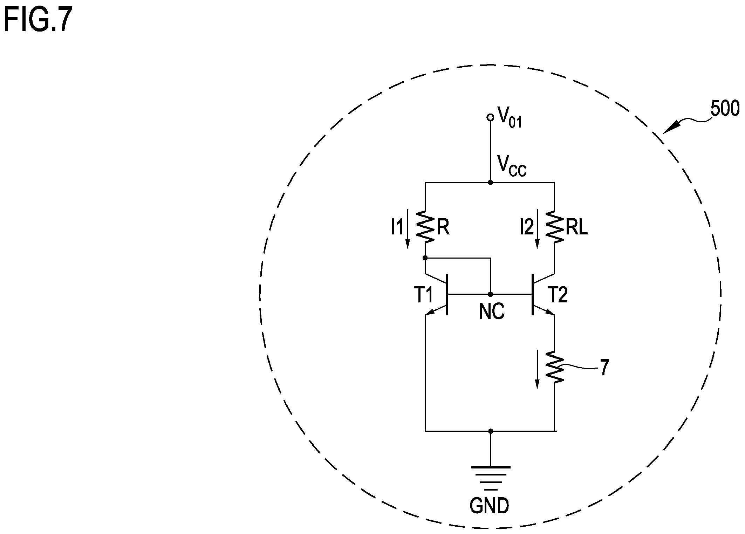

With reference to the first embodiment and third embodiment, Figure 7 shows an example of a logic circuit 400 for managing an analog temperature detection signal (corresponding to a first voltage V_{T}) and the analog flying animals shock detection signal (second voltage V_{B}).

According to this example, the output voltage Vₒ₁ is then usable for the purpose of supplying or commanding the above described resistive element 7 and/or deterrent device 25.

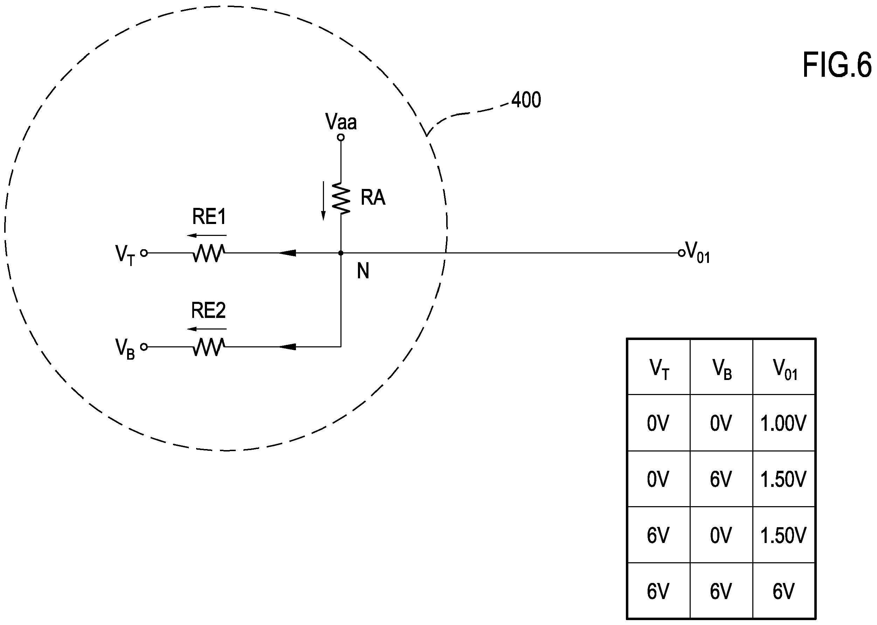

Preferably, the logic circuit 400 has the truth table shown in Figure 6. If the first voltage V_{T} and second voltage V_{B} have a value (0 V, for example) based on the fact the temperature has not dropped below the threshold value and no flying animal is detected, the output voltage Vₒ₁ takes a value that does not activate both the heating of the resistive element 7, and the deterrent means 25.

If the voltages V_{T} and V_{B} have such values so that only one of the two events (a temperature decrease or a flying animal detection) is detected, then an output voltage having an intermediate value (1.5 V, for example) is generated. Obviously, the output voltage varies as the strength of the input voltages varies which in turn are respectively a function of the varying temperature and of the applied mass varying according to the type of flying animal.

If the voltages V_{T} and V_{B} have such values so that both the events (temperature decrease and flying animal detection) are detected, then it is generated an output voltage having a value greater than the previous one (it could also reach the full scale value: 6V, for example) to which corresponds a more incisive action than the one of the previous case, of the resistive element 7 and deterrent means 25. For example, a thermal increase of the resistive element 7 is greater for this latter case than the intermediate case, even though the deterring thermal stress falls into limits which never hurt a flying animal. After all, a greater voltage generated by the sensor of the hitting mass, shows that the flying animal has a proportionally greater size and therefore requires a more intense deterring stimulation.

Said simultaneous signals of a temperature decrease and of an impact detected by the piezoelectric sensor, can be an indication of a forming snow build-up or of a frost layer, which are such to activate the defrosting and heating actions by heating the resistive element.

According to the particular example of Figure 6, the logic circuit 400 can comprise a first terminal of the first voltage V_{T}, connected to a first resistive element R_{E1} also connected to an output node N. The output node N is connected, through a supplying resistor R_{A}, to an associated supplying terminal Vaa. Moreover, the logic circuit 400 comprises a second terminal for the second voltage V_{B}, connected to a second resistive element R_{E2}, also connected to the output node N. The output voltage Vₒ₁ is withdrawn from the output node N. The signals detecting the temperature and the impact of flying animals can be suitably amplified before being supplied to the logic circuit 400.

Figure 7 shows an example of a generating circuit 500 configured for supplying electric current to the resistive element 7 to be used, for example, both for preventing ice from forming and for deterring flying animals. The generating circuit 500, for example, receives as an input, the output voltage Vₒ₁ supplied by the logic circuit 400 of Figure 6.

According to the example in Fig 7, the generating circuit 500 is a Widlar mirror comprising a first transistor T1 (for example of a BJT type), the collector and base thereof being connected to a common node Nc, and a second transistor T2, the base thereof being connected to the common node Nc. The voltage Vₒ₁ is applied to a supplying node Vcc. To the supplying node Vcc is connected a first mirror resistor R_{M} also connected to the collector of the first transistor T1. Further, a second mirror resistor R_{L} is interposed between the supplying node Vcc and the collector of the second transistor T2. The emitter of the first transistor T1 is connected to the ground terminal GND, while the resistive element 7 is interposed between the emitter terminal of the second transistor T2 and the ground terminal.

The described generating circuit 500 enables to supply the resistive element 7 with the desired current values as a function of the voltage Vₒ₁ values.

### Second circuit example: detecting the temperature and commanding the resistive element

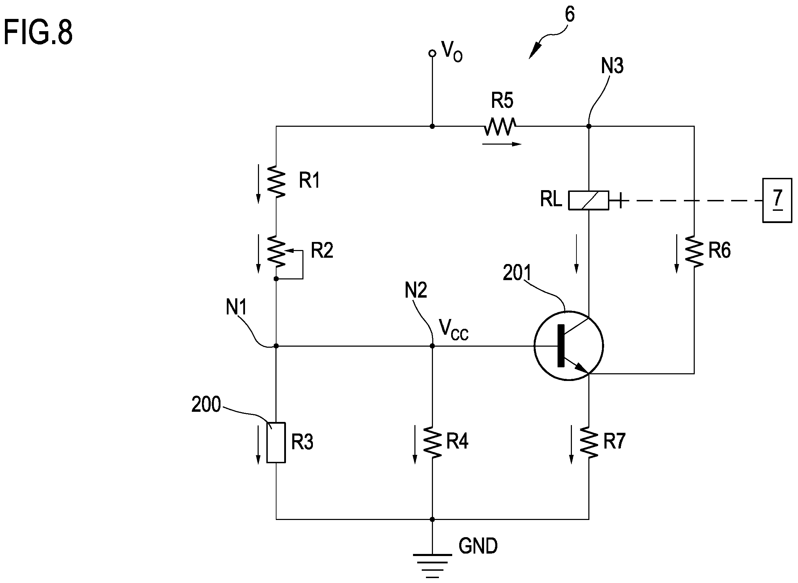

With reference to the first embodiment (preventing/melting ice), Figure 8 shows an example of a temperature sensor 6 comprising a sensitive element 200 (e.g. a NTC sensor), inserted in a control circuit. The control circuit is provided with a relay RL and with a control component 201 such as a bipolar junction transistor (BJT).

More particularly, the sensor 6 is provided with a terminal for supplying a voltage Vₒ, connected to a first node N1 through a first resistor R1 serially connected to a second resistor R2 (such as a potentiometer). The first node N1 is connected to a second node N2 (associated to a voltage Vcc) and to the ground terminal GND, through the sensitive element 200, associated to a resistance value R3.

The second node N2 is connected to a fourth resistor R4, in turn connected to the ground terminal GND. Moreover, the second node N2 is connected to a base terminal of the transistor 201.

The supplying terminal Vo, by a fifth resistor R5 is connected to a third node N3 connected also to the emitter terminal of the transistor 201 (by a sixth resistor R6) and to the collector terminal of the transistor 201, by the relay RL. The relay RL (e.g. a solid-state device) operates as a circuit breaker and commands to supply the resistive element 7.

The emitter terminal of the transistor 201 is connected to a seventh resistor R7, in turn connected to the ground terminal GND.

With reference to the operation, it is observed that as the external temperature varies, the value of the resistance (R3) associated to the sensitive element 200 varies. Moreover, the resistance values of the first resistor R1, second resistor R2, third resistor R3, and fourth resistor R4, determine, by operating as voltage dividers, the voltage Vcc at the second node N2.

The second resistor R2, implemented as a potentiometer, enables to set a temperature threshold value, at such value the relay RL is caused to switch.

Specifically, as the external temperature varies, the resistance of the sensitive element 200 changes and the voltage Vcc at the second node N2 changes, which controls the current intensity at the base terminal of the transistor 201. The base current turns on the transistor 201 and triggers a current between the collector and emitter, such current causes the relay RL to operate. Indeed, the collector current commands the relay RL by turning it on and off, as a function of a signal indirectly obtained from the sensitive element 200. It is observed that the resistance R6 enables to stabilize the emitter voltage.

It is observed that the relay RL can perform in turn plural functions. For example, the relay RL can, by a further simple contact, close one of the ports of the logic circuit of Figure 6, always generating for example the voltage Vt if this one is the voltage of the port selected for inputting the temperature signal. Further, appropriately modifying the electronic circuit and selecting a temperature sensor 200 having a suitable bandwidth, the relay RL, even though is for example only of a double contact type, could close another circuit which activates a micro-fan for cooling down the interior of the lamp body in the summertime.

### Third circuit example: generating a signal varying the flying animals deterring function

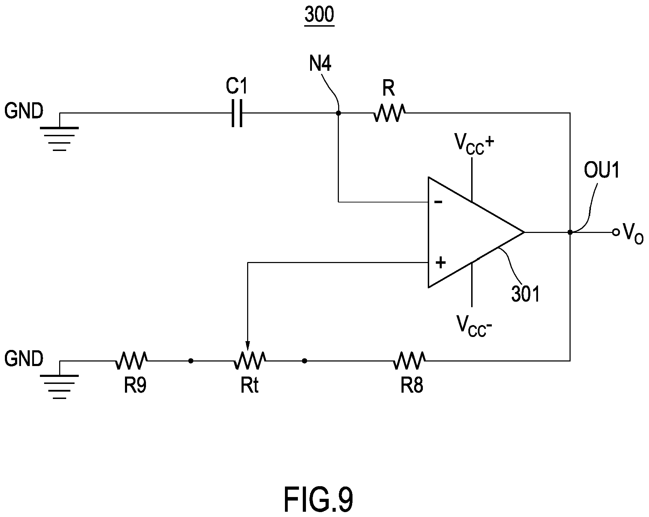

The illustrative circuit in Figure 9 refers to the third embodiment and shows a circuit 300 generating a time-varying signal, for example of a pulsed-type, to be used as a supplying or commanding signal of the deterrent device 25.

According to the shown example, the generating circuit 300 is configured for generating a square wave type signal. The generating circuit 300 comprises an operational amplifier 301 (in an inverting configuration, for example) exhibiting the inverting terminal (-) connected to a fourth node N4 connected to a capacitor C1, also connected to the ground terminal GND.

An output node OU1 of the inverting amplifier is connected to the fourth node N4 by a resistor R and is also connected to an eighth resistor R8. The eighth resistor R8 is connected to a feedback resistor Rt (representing the shock sensor 11) and to a ninth resistor R9 also connected to the ground terminal GND.

The shock sensor 11 (a piezoelectric sensor, for example) generates a positive feedback signal determining the value of the voltage V+ at the noninverting terminal (+) of the operational amplifier 301, as a function of the desired output voltage Vo.

The output voltage Vo switches between two values by defining a square wave, the characteristics thereof depend on the saturation voltages of the operational amplifier 301. Particularly, switching the output voltage Vo is a function of the difference between the voltage V+ and the voltage V- at the fourth node N4.

The generating circuit 300 enables to obtain the characteristics of the generated square wave (the amplitude and frequency, for example) depending on the signal supplied by the shock sensor 11 (setting the voltage V+) and therefore to cause a deterring effect correlated to the weight and number of flying animals, for example, which are on the protective plate 13. For example, in the presence of a heavy flying animal, the circuit can be configured so that the generated square wave (or another pulsed signal) can cause a greater temperature increase. Moreover, changing the frequency of the pulsed signal as a function of different characteristics of the flying animals, enables to increase the deterring effect.

The generating circuit 300 is also useable for melting snow building up on the protective plate 13.

The generating circuit 300 of Figure 9 could have, for example, a frequency adjusting field comprised between 400 Hz and 1,000 Hz.

As it is apparent from the above given description of different embodiments of the lamp 100 (which can be independent from each other), the described device has several advantages with respect to the lamp of the prior art.

## Claims

1. Lighting device (100) comprising:
a case (1) including a power supply module (4) and a control module (5) for controlling the power supply module (4);
at least one lighting body (2) supplied by the power supply module (4), and configured to generate a light radiation;
a heating device (7) arranged to withdraw power from the power supply module (4) and to cause a heat emission such as to prevent ice from forming on the case (1) and/or to melt the ice formed on the case (1), the heating device comprising a resistive element (7) arranged to be supplied by an electric current and to cause the heat emission;
a shock sensor (11) associated to the case (1) configured to supply to the control module (5) a signal indicative of the snow build-up on the case (1); the control module (5) being such to command the activation of the heating device (7) and causing the snow to melt:
**characterized by** the fact that the case (1) further comprises:
a movable protective plate (13) oriented for enabling said snow to build up; wherein the shock sensor (11) is operatively associated to said protective plate (13) and the protective plate (13) is provided with a slit (13a) from which the resistive element (7) can project when the protective plate (13) moves down due to the snow weight in order to bring the resistive element (7) in contact with the snow to be melted.

2. Lighting device (100) according to claim 1, wherein the shock sensor (11) comprises one of the following devices: an accelerometer, a piezoelectric accelerometer, a potentiometer.

3. Lighting device (100) according to at least one of the preceding claims, wherein the protective plate is provided with elastically yieldable feet (22).

4. Lighting device (100) according to claim 1, further comprising:
a sensor device (6) configured to detect a temperature of the surrounding environment and to generate a detection signal to be supplied to the control module (5); and wherein:
the control module (5) is configured for analyzing the detection signal and to provide electric power to the resistive element (7), obtained from the supply module (4), at a detected temperature promoting the formation/presence of ice.

5. Lighting device (100) according to claim 1, wherein the electric supply module (4) comprises photovoltaic cells (8) for generating electric power to be supplied to the lighting body (2), and mounted on a supporting plate (16) connected to the case (1).

6. Lighting device (100) according to at least claim 1, wherein:
said shock sensor (11) is associated to the case (1) and is further configured to detect a shock and/or presence of a flying animal on the case and to provide an associated flying animal presence signal to the control module (5);
the device further comprising: a flying animal presence deterrent module (25) configured to cause a flying animal to move away; and wherein:
the control module (5) is configured to receive the flying animal presence signal, recognize the presence of the flying animal, and activate the deterrent device (25).

7. Lighting device (100) according to at least claim 6, wherein said shock sensor is an accelerometer (11) and the control module (5) is adapted to filter out the noise components from the flying animal presence signal.

8. Lighting device (100) according to at least claim 7, wherein the deterrent module (25) is implemented by at least one of the following devices: an annoying radiofrequency generator, a wire suitable to be heated up to a controlled temperature, an annoying light source, at least one movable element.

9. Lighting device (100) according to at least claim 1, wherein the control module (5) is such to enable to store the following data/information:
- values about longitude and latitude of the place wherein the lighting device (100) is installed;
- an azimuth angle with respect to the south of the lamp (100);
- information about the pollution level in the installation environment;
- minimum night time lighting duration; the control module (5) being such to set the operating characteristics of the lighting device (100) based on said data/information.

10. Lighting device (100) according to at least claim 1, wherein a solar model indicating sun presence hours, hours of total absence of the sun and post-sunset late-evening hours is resident in the control module (5); the control module (5) being such to set the operative characteristics of the lighting device (100) based on said solar model.

11. Lighting device (100) according to claim 1, further comprising: photovoltaic sensors respectively provided with red, green, and blue filters capable of supplying to the control module (5) signals indicative of the spectral composition of the sunlight; the control module (5) being configured to modify the spectral contents of the light emitted from the lighting body (2) as a function of the spectral composition of the sunlight.

## Patentansprüche

1. Eine Beleuchtungsvorrichtung (100), umfassend:
ein Gehäuse (1) mit einem Stromversorgungsmodul (4) und einem Steuermodul (5) zum Steuern des Stromversorgungsmoduls (4);
mindestens einen Beleuchtungskörper (2), der vom Stromversorgungsmodul (4) versorgt wird und zum Erzeugen einer Lichtstrahlung konfiguriert ist;
eine Heizvorrichtung (7), so angeordnet, dass sie dem Stromversorgungsmodul (4) Energie entzieht und eine Wärmeabstrahlung bewirkt, die verhindert, dass sich Eis auf dem Gehäuse (1) bildet und/oder das auf dem Gehäuse (1) gebildete Eis schmilzt, wobei die Heizvorrichtung ein Widerstandselement (7) umfasst, das so angeordnet ist, dass es von einem elektrischen Strom versorgt wird und die Wärmeabstrahlung verursacht;
einen Schocksensor (11), der dem Gehäuse (1) zugeordnet ist, so konfiguriert, dass er dem Steuermodul (5) ein Signal liefert, das die Schneebildung auf dem Gehäuse (1) anzeigt; wobei das Steuermodul (5) derart ist, dass es die Aktivierung der Heizvorrichtung (7) steuert und den Schnee zum Schmelzen bringt:
**gekennzeichnet durch** die Tatsache, dass das Gehäuse (1) ferner umfasst:
eine bewegliche Schutzplatte (13), die so ausgerichtet ist, dass sich besagter Schnee aufbauen kann; wobei der Schocksensor (11) der besagten Schutzplatte (13) funktionsfähig zugeordnet ist und die Schutzplatte (13) mit einem Schlitz (13a) versehen ist, von dem das Widerstandselement (7) hervorstehen kann, wenn sich die Schutzplatte (13) aufgrund des Schneegewichts nach unten bewegt, um das Widerstandselement (7) in Kontakt mit dem zu schmelzenden Schnee zu bringen.

2. Eine Beleuchtungsvorrichtung (100) gemäß Anspruch 1, wobei der Schocksensor (11) eine der folgenden Vorrichtungen umfasst: einen Beschleunigungssensor, einen piezoelektrischen Beschleunigungssensor, ein Potentiometer.

3. Eine Beleuchtungsvorrichtung (100) gemäß mindestens einem der vorhergehenden Ansprüche, wobei die Schutzplatte mit elastisch nachgiebigen Füßen (22) versehen ist.

4. Eine Beleuchtungsvorrichtung (100) gemäß Anspruch 1, ferner umfassend:
eine Sensorvorrichtung (6), die konfiguriert ist, um eine Temperatur der Umgebung zu erfassen und ein Erfassungssignal zu erzeugen, das dem Steuermodul (5) zugeführt wird; und wobei:
das Steuermodul (5) konfiguriert ist, um das Erfassungssignal zu analysieren und dem aus dem Versorgungsmodul (4) erhaltenen Widerstandselement (7) bei einer erfassten Temperatur, die die Bildung / Anwesenheit von Eis fördert, elektrische Energie zuzuführen.

5. Eine Beleuchtungsvorrichtung (100) gemäß Anspruch 1, wobei das elektrische Versorgungsmodul (4) photovoltaische Zellen (8) zum Erzeugen von elektrischer Energie umfasst, die dem Beleuchtungskörper (2) zuzuführen ist, und auf einer Trägerplatte (16) montiert ist, die mit dem Gehäuse (1) verbunden ist.

6. Eine Beleuchtungsvorrichtung (100) gemäß mindestens Anspruch 1, wobei:
besagter Schocksensor (11) dem Gehäuse (1) zugeordnet ist und ferner konfiguriert ist, um einen Schock und/oder das Vorhandensein eines fliegenden Tieres auf dem Gehäuse zu erfassen und ein zugehöriges Anwesenheitssignal für fliegende Tiere an das Steuermodul (5) zu liefern;
wobei die Vorrichtung ferner umfasst: ein Abschreckmodul (25) für die Anwesenheit von Flugtieren, das konfiguriert ist, um zu bewirken, dass sich ein Flugtier entfernt; und wobei:
das Steuermodul (5) konfiguriert ist, um das Anwesenheitssignal des Flugtiers zu empfangen, das Vorhandensein des Flugtiers zu erkennen und die Abschreckvorrichtung (25) zu aktivieren.

7. Eine Beleuchtungsvorrichtung (100) gemäß mindestens Anspruch 6, wobei der Schocksensor ein Beschleunigungssensor (11) ist und das Steuermodul (5) angepasst ist, um die Geräuschkomponenten aus dem Anwesenheitssignal des fliegenden Tieres herauszufiltern.

8. Eine Beleuchtungsvorrichtung (100) gemäß mindestens Anspruch 7, wobei das Abschreckmodul (25) durch mindestens eine der folgenden Vorrichtungen implementiert ist: einen störenden Hochfrequenzgenerator, einen Draht, der geeignet ist, auf eine kontrollierte Temperatur erhitzt zu werden, eine störende Lichtquelle, mindestens ein bewegliches Element.

9. Eine Beleuchtungsvorrichtung (100) nach mindestens Anspruch 1, wobei das Steuermodul (5) so beschaffen ist, dass es die folgenden Daten/Informationen speichern kann:
- Werte über Längen- und Breitengrad des Ortes, an dem die Beleuchtungsvorrichtung (100) installiert ist;
- einen Azimutwinkel in Bezug auf den Süden der Lampe (100);
- Informationen über den Verschmutzungsgrad in der Installationsumgebung;
- minimale Nachtzeit-Beleuchtungsdauer; wobei das Steuermodul (5) so beschaffen ist, dass es die Betriebseigenschaften der Beleuchtungsvorrichtung (100) aufgrund der Daten/Informationen einstellt.

10. Eine Beleuchtungsvorrichtung (100) gemäß mindestens Anspruch 1, wobei ein Solarmodell, das Sonnenanwesenheitsstunden, Stunden der völligen Abwesenheit der Sonne und späte Abendstunden nach Sonnenuntergang anzeigt, im Steuermodul (5) untergebracht ist; wobei das Steuermodul (5) derart ist, dass es die Betriebseigenschaften der Beleuchtungsvorrichtung (100) basierend auf dem Solarmodell einstellt.

11. Eine Beleuchtungsvorrichtung (100) gemäß Anspruch 1, ferner umfassend: photovoltaische Sensoren, die jeweils mit roten, grünen und blauen Filtern versehen sind, die in der Lage sind, dem Steuermodul (5) Signale zu liefern, die die spektrale Zusammensetzung des Sonnenlichts anzeigen; wobei das Steuermodul (5) konfiguriert ist, um den spektralen Gehalt des vom Beleuchtungskörper (2) emittierten Lichts in Abhängigkeit von der spektralen Zusammensetzung des Sonnenlichts zu ändern.

## Revendications

1. Dispositif d'éclairage (100) comprenant :
un boîtier (1) incluant un module d'alimentation (4) et un module de commande (5) pour commander le module d'alimentation (4) ;
au moins un corps d'éclairage (2) alimenté par le module d'alimentation (4) et configuré pour générer un rayonnement lumineux ;
un dispositif de chauffage (7) agencé pour extraire le courant du module d'alimentation (4) et provoquer une émission de chaleur de manière à empêcher la formation de glace sur le boîtier (1) et/ou à faire fondre la glace formée sur le boîtier (1), le dispositif de chauffage comprenant un élément résistif (7) agencé pour être alimenté par un courant électrique et provoquer une émission de chaleur ;
un capteur de choc (11) associé au boîtier (1) configuré pour fournir au module de commande (5) un signal indiquant l'accumulation de neige sur le boîtier (1) ; le module de commande (5) étant tel qu'il commande l'activation du dispositif de chauffage (7) et provoque la fonte de la neige :
**caractérisé par le fait que** le boîtier (1) comprend également :
une plaque de protection mobile (13) orientée pour permettre à ladite neige de s'accumuler ; où le capteur de choc (11) est associé de manière opérationnelle à ladite plaque de protection (13) et la plaque de protection (13) est munie d'une fente (13a) à partir de laquelle l'élément résistif (7) peut faire saillie lorsque la plaque de protection (13) se déplace en raison du poids de la neige, afin de mettre l'élément résistif (7) en contact avec la neige à fondre.

2. Dispositif d'éclairage (100) selon la revendication 1, dans lequel le capteur de choc (11) comprend l'un des dispositifs suivants : un accéléromètre, un accéléromètre piézoélectrique, un potentiomètre.

3. Dispositif d'éclairage (100) selon au moins l'une des revendications précédentes, dans lequel la plaque de protection est munie de pieds déformables élastiquement (22).

4. Dispositif d'éclairage (100) selon la revendication 1, comprenant également :
un dispositif de détection (6) configuré pour détecter une température de l'environnement alentour et pour générer un signal de détection à fournir au module de commande (5) ; et où :
le module de commande (5) est configuré pour analyser le signal de détection et pour fournir de l'énergie électrique à l'élément résistif (7), obtenue à partir du module d'alimentation (4), à une température détectée favorisant la formation/présence de glace.

5. Dispositif d'éclairage (100) selon la revendication 1, où le module d'alimentation électrique (4) comprend des cellules photovoltaïques (8) pour à générer de l'énergie électrique à fournir au corps d'éclairage (2), et montées sur une plaque de support (16) reliée au boîtier (1).

6. Dispositif d'éclairage (100) selon au moins la revendication 1, où :
ledit capteur de choc (11) est associé au boîtier (1) et est également configuré pour détecter un choc et/ou la présence d'un animal volant sur le boîtier et pour fournir un signal de présence d'animal volant associé au module de commande (5) ;
le dispositif comprenant également : un module de dissuasion de la présence d'un animal volant (25) configuré pour amener un animal volant à s'éloigner ; et où :
le module de commande (5) est configuré pour recevoir le signal de présence d'un animal volant, reconnaître la présence de l'animal volant et activer le dispositif de dissuasion (25).

7. Dispositif d'éclairage (100) selon au moins la revendication 6, où ledit capteur de choc est un accéléromètre (11) et le module de commande (5) est adapté pour filtrer les composants de bruit du signal de présence d'animal volant.

8. Dispositif d'éclairage (100) selon au moins la revendication 7, où le module de dissuasion (25) est mis en oeuvre par au moins un des dispositifs suivants : un générateur de radiofréquence gênante, un fil pouvant être chauffé à une température contrôlée, une source de lumière gênante, au moins un élément mobile.

9. Dispositif d'éclairage (100) selon au moins la revendication 1, où le module de contrôle (5) est tel qu'il permet de stocker les données/informations suivantes :
- des valeurs autour de la longitude et de la latitude de l'endroit où le dispositif d'éclairage (100) est installé ;
- un angle d'azimut par rapport au sud de la lampe (100) ;
- des informations sur le niveau de pollution dans l'environnement d'installation ;
- durée minimale d'éclairage de nuit ; le module de commande (5) étant tel qu'il règle les caractéristiques de fonctionnement du dispositif d'éclairage (100) sur la base desdites données/informations.

10. Dispositif d'éclairage (100) selon au moins la revendication 1, où un modèle solaire indiquant les heures de présence du soleil, les heures d'absence totale de soleil et les heures après le coucher du soleil réside dans le module de commande (5) ; le module de commande (5) étant tel qu'il règle les caractéristiques de fonctionnement du dispositif d'éclairage (100) sur la base dudit modèle solaire.

11. Dispositif d'éclairage (100) selon au moins la revendication 1, comprenant également : des capteurs photovoltaïques munis respectivement de filtres rouge, vert et bleu capables de fournir au module de commande (5) des signaux indicatifs de la composition spectrale de la lumière solaire ; le module de commande (5) étant configuré pour modifier le contenu spectral de la lumière émise par le corps d'éclairage (2) en fonction de la composition spectrale de la lumière solaire.
